(19) Europäisches Patentamt
European Patent Office
Office européen des brevets

(11) EP 2 057 478 B1

(12) **EUROPEAN PATENT SPECIFICATION**

(45) Date of publication and mention of the grant of the patent:
**16.11.2011 Bulletin 2011/46**

(21) Application number: **06824890.5**

(22) Date of filing: **01.09.2006**

(51) Int Cl.:
***G01S 5/06*** (2006.01)

(86) International application number:
**PCT/US2006/034398**

(87) International publication number:
**WO 2008/027056 (06.03.2008 Gazette 2008/10)**

(54) **SYSTEM AND METHOD FOR RELATIVE POSITIONING OF AN AUTONOMOUS VEHICLE**

SYSTEM UND VERFAHREN ZUR RELATIVEN POSITIONIERUNG EINES AUTONOMEN FAHRZEUGS

SYSTEME ET PROCEDE POUR LE POSITIONNEMENT RELATIF D'UN VEHICULE AUTONOME

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.05.2009 Bulletin 2009/20**

(73) Proprietor: **The Boeing Company**
**Chicago, IL 60606-2016 (US)**

(72) Inventor: **HREHA, Mark, A.**
**Alton, IL 62002 (US)**

(74) Representative: **Land, Addick Adrianus Gosling et al**
**Arnold & Siedsma**
**Sweelinckplein 1**
**2517 GK Den Haag (NL)**

(56) References cited:
**US-A- 3 757 340    US-A1- 2004 108 954**
**US-B1- 6 577 272**

- **REEDER C A ET AL: "Two-hydrophone heading and range sensor applied to formation-flying for AUVs" OCEANS '04. MTTS/IEEE TECHNO-OCEAN '04 KOBE, JAPAN NOV. 9-12, 2004, PISCATAWAY, NJ, USA,IEEE, 9 November 2004 (2004-11-09), pages 517-523, XP010776084 ISBN: 0-7803-8669-8**

## Description

The present invention relates to methods for vehicle navigation and guidance, and more particularly, to methods and systems for determining a position of a reference vehicle relative to an autonomous vehicle.

A method for determining a position of a reference point relative to a vehicle as defined in the preamble of claim 1 is known from US 6,577,272 B1. This known method is based on time difference of arrival measurements. It uses an emitter at a reference point that sends out radio frequency signals to a vehicle, e.g. an aircraft. The aircraft is provided with multiple antennas. The relative position between the vehicle and the reference point can be determined using the time difference of arrival measurements performed by these antennas.

An autonomous vehicle has an independent navigation or guidance system that is not directly controlled by another vehicle. Precise positioning of autonomous vehicles, such as aircraft, watercraft and automobiles, relative to one or more stationary or moving references is commonly required for space, air, and surface operations such as ground or cancier-based landing, in-flight aircraft refueling, aircraft formation maneuvers, spacecraft docking, and collision avoidance. Conventional techniques for determining a position of a vehicle relative to a stationary or moving reference includes digital imagery processing, active sensor techniques (e.g., radar or laser techniques), and global positioning techniques (GPS). Digital imagery processing and active sensor techniques typically require sophisticated, expensive sensor equipment and human pilot interaction with the autonomous vehicle, which may be problematic in certain operations such as aircraft refueling or formation maneuvers. Conventional GPS techniques require four GPS satellite transmitters, which are susceptible to incidental or overt disruptions in transmissions to an autonomous vehicle, causing delays and errors in determining the position of the autonomous vehicle relative to the GPS satellites.

An object of the present invention is to provide a solution that overcomes the problems noted above and others previously experienced for determining the position of an autonomous vehicle.

In accordance with methods consistent with one implementation of the present invention, a method for determining a position of a reference point relative to a vehicle is provided in accordance with claim 1.

In accordance with articles of manufacture consistent with one implementation of the present invention, a computer-readable medium containing instruction that cause a vehicle having a program to perform a method for determining a position of a reference point relative to the vehicle is provided in accordance with claim 6.

In accordance with systems consistent with one implementation of the present invention, a vehicle positioning system is provided in accordance with claim 7.

Other systems, methods, features, and advantages of the present invention will be or will become apparent to one with skill in the art upon examination of the following figures and detailed description. It is intended that all such additional systems, methods, features, and advantages be included within this description, be within the scope of the invention, and be protected by the accompanying claims.

The accompanying drawings, which are incorporated in and constitute a part of this specification, illustrate an implementation of the present invention and, together with the description, serve to explain the advantages and principles of the invention. In the drawings:

Figure 1 is a diagram of a control vehicle having a system for determining the relative position of a reference vehicle consistent with one implementation of the present invention;
Figure 2 is an exemplary block diagram of the relative positioning system of Figure 1;
Figure 3 depicts an exemplary event waveform and an exemplary measurement waveform detected by at least three receivers of the relative positioning system to determine relative position of the reference vehicle in accordance with the present invention; and
Figures 4A-B is a flow diagram of an exemplary process performed by the relative positioning system to determine the relative position of the reference vehicle.

Reference will now be made in detail to an implementation in accordance with methods, systems, and products consistent with one implementation of the present invention as illustrated in the accompanying drawings. Methods, systems, and articles of manufacture consistent with one implementation of the present invention determine a position or location of a reference vehicle or stationary point relative to an autonomous (or control) vehicle, allowing the autonomous vehicle to maintain a predetermined distance, range, or guidance profile relative to the reference vehicle or point without the reference vehicle or point communicating position information to the autonomous vehicle.

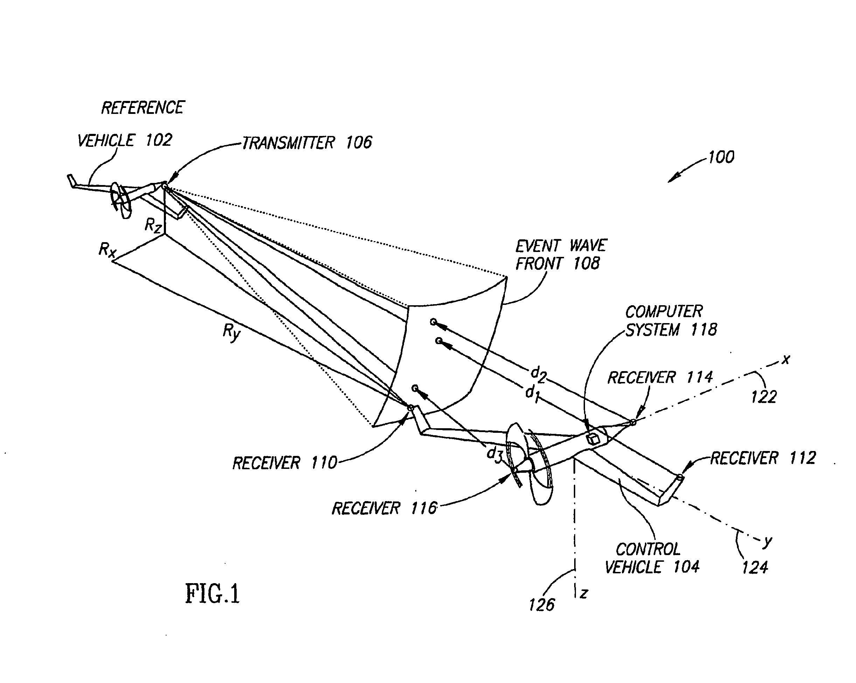

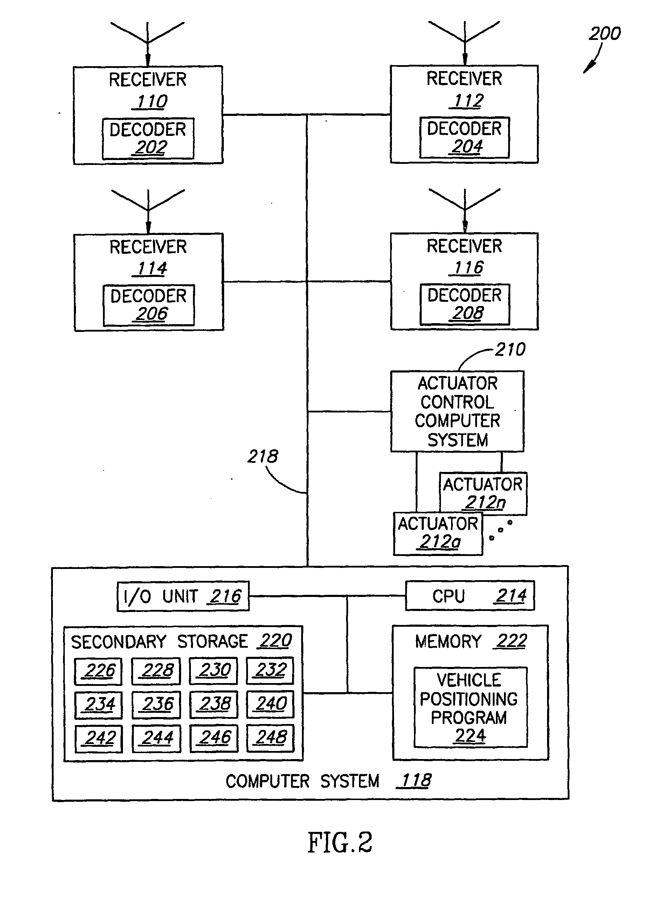

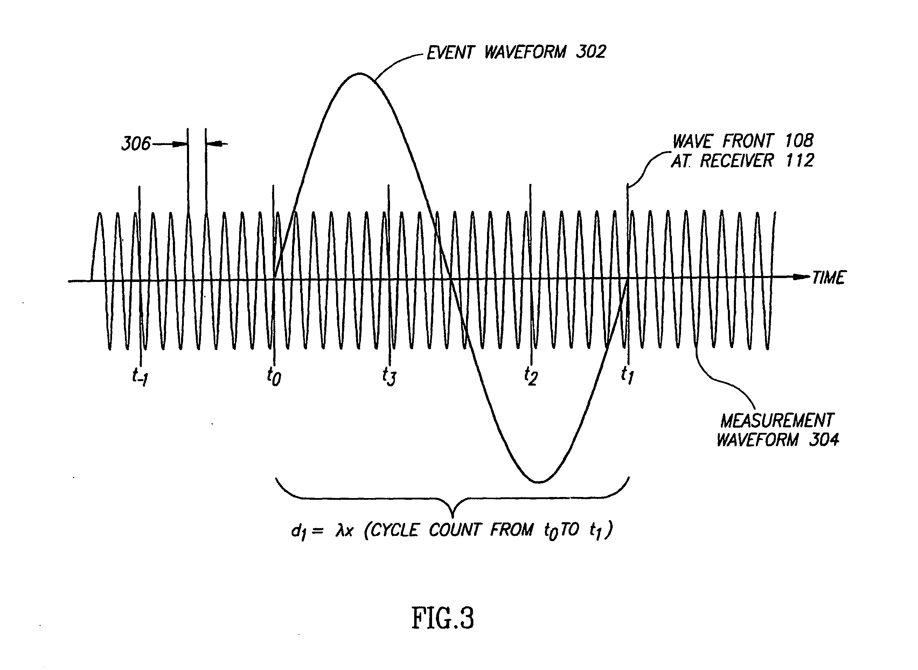

Fig. 1 depicts a diagram of a vehicle positioning system 100 including a reference or first vehicle 102 and a control or an autonomous second vehicle 104. The autonomous vehicle 104 includes a relative positioning system 200 as shown in Fig. 2 for determining the position of the reference vehicle 102 relative to the control vehicle 104 in accordance with methods and systems consistent with one implementation of the present invention. The reference vehicle 102 includes a transmitter 106 and the relative positioning system 200 of the autonomous vehicle 104 includes a plurality of receivers 110, 112, 114, and 116 and a computer system 118 operatively connected to each receiver. The transmitter 106 of the reference vehicle 102 is operatively configured to emit a first or event waveform 302 and a second or measurement waveform 304 having a relationship with the event waveform 302 as depicted in Fig. 3. Although the measurement waveform 304 may have other relationships with the event waveform 302, in one implementation of the present invention, the measurement waveform has a fixed and known number of cycles for each event waveform cycle when emitted by the transmitter 106. The event waveform 302 and the measurement waveform 304 may be detected by at least three receivers 110, 112, 114, and 116 of the relative positioning system 200 to determine the position of the reference vehicle 102 relative to the autonomous vehicle 104 in accordance with the present invention.

The event waveform 302 signals the start and end of a measurement period to the relative positioning system 200 of the autonomous vehicle 104 as described in further detail below. In one implementation, the event waveform 302 signals the start of the measurement period to the relative positioning system 200 when a first receiver (e.g., receiver 110) of the relative positioning system 200 detects the event waveform 302 and signals the end of the measurement period when a last of at least three receivers 112, 114, and 116 detects the event waveform 302. The event waveform 302 may be a single pulse or a periodic or continuous waveform having a first frequency. The front 108 of the event waveform 302 is shown in Fig. 1 as detected by the relative positioning system 200 of the autonomous vehicle 104 at a first of the receiver locations (e.g., location of receiver 110). When the event waveform front 108 reaches the first receiver 110, the position of the reference vehicle 102 or reference point (i.e., transmitter 106) is represented by the unknown coordinates $(R_x, R_y, R_z)$. The range R from the reference vehicle 102 or transmitter 106 to the first receiver 110 is given by Equation (1). The distance from the reference vehicle 102 or transmitter 106 to each receiver 112, 114, and 116 other than the first receiver is equal to the unknown range R plus the respective distance $d_1$, $d_2$, and $d_3$, each of which is derived in accordance with methods and systems consistent with one implementation of the present invention.

$$R = \sqrt{R_x{}^2 + R_y{}^2 + R_z{}^2} \tag{1}$$

The relative positioning system 200 is operatively configured to derive the unknown coordinates $(R_x, R_y, R_z)$ based on Equation (1) and the geometric relationship between the reference vehicle 102 and the receivers 110, 112, 114, and 116 as reflected in Equation (2).

$$\left(R_x - \tilde{x}_i\right)^2 + \left(R_y - \tilde{y}_i\right)^2 + \left(R_z - \tilde{z}_i\right)^2 = \left(R + d_i\right)^2 \tag{2}$$

where the differences $\tilde{x}_i$, $\tilde{y}_i$, and $\tilde{z}_i$ between the respective coordinates of the first receiver 110 and each other receiver 112, 114, and 16 are derived as follows:

$$\tilde{x}_i = x_i - x_0, \quad \tilde{y}_i = y_i - y_0, \quad \tilde{z}_i = z_i - z_0 \quad \text{for} \quad i = 1,2,3 \tag{3}$$

As shown in Fig. 3, the measurement waveform 304 has a second frequency and a plurality of cycles 306 that are used by the relative positioning system 200 to derive the relative position of the reference vehicle 102 after the event waveform 302 is detected by the system 200 to start the measurement operation. In one implementation, the second frequency of the measurement waveform 304 is higher than the first frequency of the first waveform 302 such that each distance $d_1$, $d_2$, and $d_3$ may be derived by the relative positioning system 200 by counting cycles 306 of the measurement waveform 304 as detected by each receiver 112, 114, and 116 other than the first receiver 110 for a predetermined period (e.g., period = $t_1$-$t_0$ for receiver 112 in Fig. 3) after the front 108 of the event waveform is initially detected by the relative positioning system 200 until the front 108 is detected by the respective receiver 112, 114, or 116. The accuracy of the distance determination may be increased by increasing the frequency (e.g., decreasing the wavelength) of the measurement waveform 304 relative to the frequency of the event waveform 302.

In another implementation, the reference vehicle 102 may be replaced by a stationary reference point having the transmitter 106. Moreover, although the reference vehicle 102 is depicted as an airplane in Fig. 1, the reference vehicle 102 may be an automobile, tank, ship, or other vehicle or vessel.

In one implementation, each receiver 110, 112, 114, and 116 is operatively configured to detect the event waveform 302 and the measurement waveform 304 and to count a respective number of waveform cycles 306 after the event waveform 302 is detected by a first of the receivers (e.g., receiver 110 or the closest receiver to the transmitter 106 depending on the orientation of the autonomous vehicle 104) until the event waveform 302 is detected by the respective receiver (e.g., receiver 112). Each receiver may be triggered to simultaneously start counting cycles 306 of the measurement waveform 304 at a time $t_1$ as shown in Fig. 3, to report each incremental or fractional count to the computer system 118, and to report a respective time (e.g., $t_0$, $t_1$, $t_2$, and $t_3$ in Fig. 3) to the computer system 118 when the event waveform 302 is detected by the respective receiver 110, 112, 114, and 116. The computer system 118 is operatively configured to recognize the first of the receivers (e.g., receiver 110) to detect the event waveform 302 based on the respective time ($t_0$, $t_1$, $t_2$, and $t_3$ in Fig. 3) reported by each receiver 110, 112, 114, and 116. The computer system 118 is also operatively configured to derive the number of cycles 306 counted by another of the receivers (e.g., receiver 112) based on the total count of cycles 306 and fraction of cycles received from the other receiver 112 after the first receiver 110 detects the event waveform 302 until the other receiver detects the event waveform 302.

Each receiver 110, 112, 114, and 116 is disposed at one of a plurality of locations within a coordinate system 120 relative to the autonomous vehicle 104. The coordinate system 120 has an x-axis 122, a y-axis 124, and a z-axis 126. In the implementation shown in Fig. 1, the origin of the coordinate system 120 is arbitrarily located along the longitudinal body axis (i.e., the x-axis 122) of the autonomous vehicle 104. However, the origin of the coordinate system 120 may be located at another point on or in relation to the autonomous vehicle 104. In this implementation, the x-axis 122 and the z-axis 126 form a plane of symmetry along the longitudinal body axis of the autonomous vehicle 104. The y-axis 124 is orthogonal to the x-axis 122 and the z-axis 126. The locations of receivers 110, 112, 114, and 116 in the coordinate system 120 are denoted as $(x_0, y_0, z_0)$, $(x_1, y_1, z_1)$, $(x_2, y_2, z_2)$, and $(x_3, y_3, z_3)$, respectively. As shown in Fig. 2, each receiver 110, 112, 114, and 116 may include a decoder 202, 204, 206, or 208, respectively, to decode the event waveform 302 and the measurement waveform 304 if either waveform is encrypted, modulated, or encoded using a known coding technique such as pulse modulation, frequency hopping, or spread spectrum coding.

The relative positioning system 200 may also include an actuator control computer system 210 operatively configured to receive, via the computer system, a position of the reference vehicle 102 relative to the autonomous vehicle 104 as derived in accordance with methods and systems consistent with one implementation of the present invention and to control one or more actuators 212a-212n of the autonomous vehicle 104 so the autonomous vehicle 104 maintains a predetermined distance or guidance profile. For example, when the autonomous vehicle 104 is an airplane, the actuator control computer system 210 may correspond to a flight control computer that controls actuators 212a-212n configured to move flight control surfaces such as a rudder or an aileron.

Returning to Fig. 2, the computer system 118 comprises a central processing (CPU) or processor 214 and an input/output (I/O) unit 216 operatively configured to allow the processor 210 to communicate or interface with the receivers 110, 112, 114, and 116 and the actuator control computer system 210 over a network or bus 218. The computer system 118 may also include a secondary storage device 220 and a memory 222.

Memory 222 comprises a relative positioning program 224 for determining the position of the reference vehicle 102 relative to an autonomous vehicle 104. As described in further detail below, the relative positioning program 224 of the computer system 118 is operatively configured to: identify a first of the receivers (e.g., receiver 110) to detect the event waveform 302; identify a respective number of measurement waveform cycles 306 counted by each of at least three of the other receivers 112, 114, and 116 during a respective period after the event waveform 302 is detected by the first receiver 110 and until the event waveform is subsequently detected by the respective other receiver 112, 114, or 116; convert the respective number of measurement waveform cycles 306 counted during the respective period into a corresponding distance $d_1$, $d_2$, and $d_3$; and to determine the position of the reference vehicle 102 relative to the autonomous vehicle 104 based on the corresponding distances $d_1$, $d_2$, and $d_3$ and respective locations 226, 228, 230, and 232 of at least three receivers within the coordinate system 120 of the autonomous vehicle 104 (e.g., locations $(x_0, y_0, z_0)$, $(x_1, y_1, z_1)$, $(x_2 y_2, z_2)$ and $(x_3, y_3, z_3)$).

In one implementation, the locations 226, 228, 230, and 232 of the receivers 110, 112, 114, and 116 within the coordinate system 120 of the autonomous vehicle 104 are stored in secondary storage 220 for access by the program 224. The respective time 234, 236, 238, and 240 (e.g., $t_0$, $t_1$, $t_2$, and $t_3$ in Fig. 3) when each receiver 110, 112, 114, and 116 detects the event waveform 302 as reported to the computer system 118 may also be stored in secondary storage 220. The detection times 234, 236, 238, and 240 may each be stored in association with a respective cycle count 242, 244, 246, and 248 reflecting a number of waveform cycles 306 and cycle fractions independently detected by the receiver 110, 112, 114, and 116 during the respective period after the event waveform is detected by the first receiver (e.g., after time $t_0$) and until the event waveform 302 is subsequently detected by the respective receiver (e.g., time $t_1$ $t_2$ or $t_3$). Alternatively, the locations 226, 228, 230, and 232, the times 234, 236, 238, and 240 and the associated cycle counts 242, 244, 246, and 248 may be stored in memory 222.

One having skill in the art will appreciate that the relative positioning program 224 may reside in memory on a system other than data processing system 200. Program 224 may comprise or may be included in one or more code sections containing instructions for performing their respective operations. While program 224 is described as being implemented as software, the program may be implemented as a combination of hardware and software or hardware alone.

Although aspects of methods, systems, and articles of manufacture consistent with one implementation of the present invention are depicted as being stored in memory, one having skill in the art will appreciate that these aspects may be stored on or read from other computer-readable media, such as secondary storage devices, like hard disks, floppy disks, and CD-ROM; a carrier wave received from a network such as the Internet; or other forms of ROM or RAM either currently known or later developed. Further, although specific components of relative positioning system 200 have been described, one having skill in the art will appreciate that a relative positioning system or other data processing system suitable for use with methods, systems, and articles of manufacture consistent with one implementation of the present invention may contain additional or different components.

Each receiver 110, 112, 114, and 116 and the actuator control computer system 210 may each comprise components similar to those described above with respect to the computer system 118, such as a CPU, an I/O, a memory, and a secondary storage.

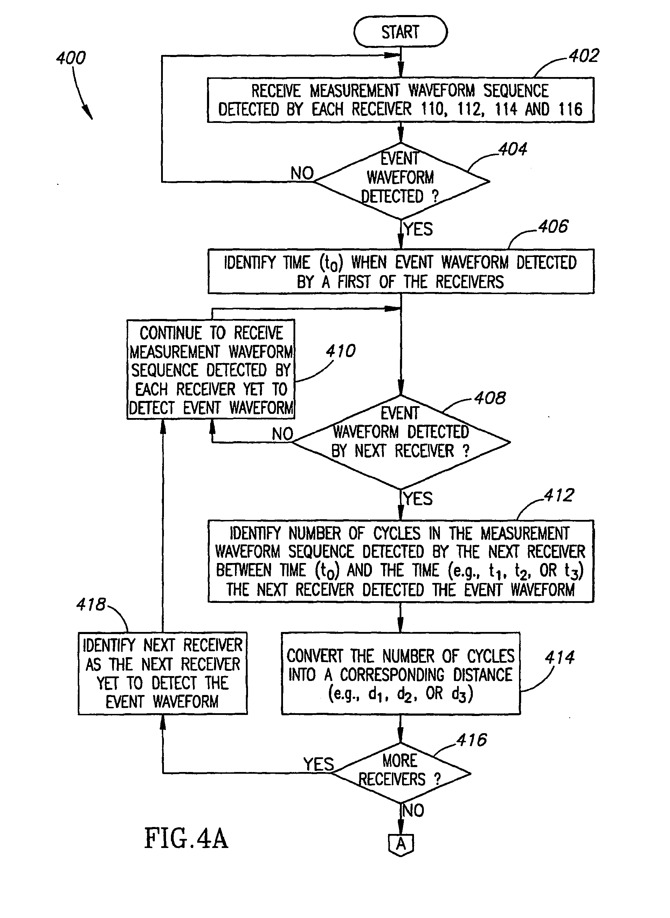

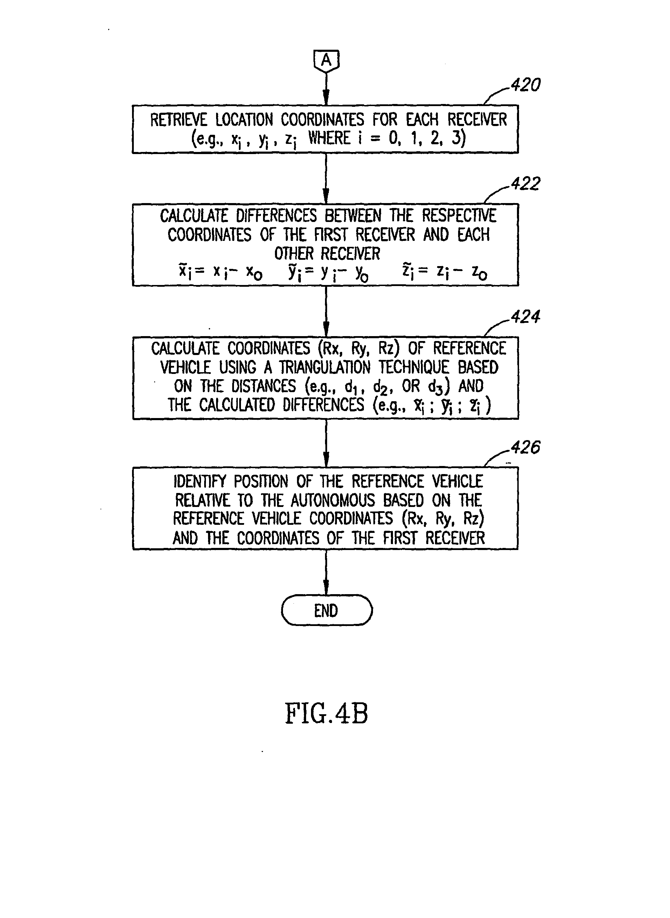

Figs. 4A-B depict a flow diagram of an exemplary process 400 performed by the relative positioning program 224 to determine the position of the reference vehicle relative to the autonomous vehicle (hereafter "the relative reference position"). Initially, the program 224 receives a respective sequence of the measurement waveform 304 detected by each receiver 110, 112, 114, and 116 (step 402). In one implementation, each receiver 110, 112, 114, and 116 may provide a sequence of the measurement waveform 304 to the program 224 by digitizing the measurement waveform 304 into fractions of cycles 306 as the waveform 304 is being detected by the respective receiver after time $t_{-1}$ and reporting the digitized measurement waveform 304 sequence to the program 224 via one or more messages on network 218. In this implementation, when a first receiver (e.g., receiver 110) detects the event waveform 302 at the time $t_0$, the program 224 is able derive from the digitized measurement waveform 304 sequence the respective cycle count 242, 244, 246, and 248 detected by the receiver 110, 112, 114, and 116 after time to and until the event waveform 302 is subsequently detected by the respective receiver (e.g., time $t_1$, $t_2$ or $t_3$). In another implementation, each receiver 110, 112, 114, and 116 may report to the program 224 each incremental or fractional count of cycles 306 detected after the time $t_{-1}$ such that the program 224 is able to derive the respective cycle count 234, 236, 238, and 240 detected by the receiver 110, 112, 114, and 116 between time to and the time when the event waveform 302 is subsequently detected by the respective receiver (e.g., time $t_1$, $t_2$ or $t_3$).

Returning to Fig. 4A, the program 224 then determines whether the event waveform 302 has been detected by a first of the receivers (step 404). If the event waveform 302 has not been detected, the program 224 continues processing at step 402 to receive the respective sequence of the measurement waveform 304 detected by each receiver 110, 112, 114 and 116. If the event waveform 302 has been detected, the program 224 identifies the time to when the event waveform 302 was detected by the first of the receivers (step 406). In the example depicted in Fig. 1, the receiver 110 is closet to the reference vehicle 102 and, thus, is the first to detect the event waveform 302 as the front 108 of the event waveform 302 passes receiver 110. Accordingly, in this example, the receiver 110 is the first to report a respective time (e.g., to in Fig. 3) to the program 224 of the computer system 118 to identify when the event waveform 302 was detected by the receiver 110.

Next, the program 224 determines whether the event waveform 302 has been detected by a next receiver (step 408). In the example depicted in Fig. 1, after the first receiver 110 has identified the time to when the event waveform 302 front 108 was first detected, the program 224 may await a message or indication from the next receiver 112, 114, or 116 of the respective time 236, 238, and 240 (e.g., $t_1$, $t_2$, and $t_3$ in Fig. 3) when the next receiver 112, 114, and 116 detected the event waveform 302. If the event waveform 302 has not yet been detected by a next receiver, the program 224 may continue to receive the respective measurement waveform sequence detected by each receiver yet to detect the event waveform 302 (step 410). Depending on the first frequency of the event waveform 302, the bandwidth of the network 218, and the processing speed of the CPU 214, the next receiver 112, 114, and 116 in step 402 may detect a respective waveform sequence including cycles 306 between time to when the event waveform 302 is first detected by the first receiver 110 and the time $t_1$, $t_2$, or $t_3$ when the event waveform 302 is detected by the next receiver 112, 114, or 116. However, in one implementation in which the processing speed of the CPU 214 is near or faster than the first frequency of the event waveform 302, the program 224 in step 408 may continue to receive additional cycles 306 in the measurement waveform 304 sequence from each receiver yet to detect the event waveform 302.

After the event waveform 302 has been detected by a next receiver (e.g., receiver 112, 114, or 116), the program 224 identifies the number of cycles or cycle count in the measurement waveform sequence detected by the next receiver between time ($t_0$) and the time (e.g., $t_1$, $t_2$, or $t_3$) the next receiver detected the event waveform 302 (step 412). As discussed above, the program 224 may store the identified cycle count 244, 246, and 248 detected by the next receiver 112, 114, and 116 in secondary storage 220 or memory 222. In another implementation, the next receiver 112, 114, and 116 may be provided with the time to reflecting the first detection of the event waveform 302 and in response report the respective cycle count 244, 246, and 248 to the program 224.

Next, the program 224 converts the number of cycles or cycle count of the next receiver into a corresponding distance $d_1$, $d_2$, or $d_3$ (step 414). The distance from the reference point (transmitter) to each receiver is equal to the unknown range R plus the measured distance.

In one implementation, the relative positioning program 224 converts the cycle count 244, 246, or 248 of the next receiver into a corresponding distance $d_1$, $d_2$, or $d_3$ by multiplying the cycle count 244, 246, and 248 by the wavelength ($\lambda$) of the measurement waveform 304, which may be derived from the second frequency ($f = 1/\lambda$) of the measurement waveform 304.

The program 224 then determines whether there are more receivers that have yet to detect the event waveform or that have a cycle count yet to be converted (step 416). If there are more receivers, the program 224 identifies the next receiver as the next receiver yet to detect the event waveform 302 (step 418) and continues processing at step 410 so that the program 224 is able to obtain a cycle count 236,238, or 240 for each of the three receivers 112, 114, and 116 other than the first receiver 110 to detect the event waveform 302.

If there are no more receivers, the program 224 then retrieves the location coordinates 226, 228, 230, and 232 for each receiver 110, 112, 114, and 116 (step 420) and calculates the differences $\tilde{x}_i$, $\tilde{y}_i$, and $\tilde{z}_i$ between the respective coordinates of the first receiver 110 and each other receiver 112, 114, and 116 (step 422) as shown in Equation (3) above.

Next, the program 224 calculates the coordinates $R_x$, Ry, $R_z$ of the reference vehicle 102 using a triangulation technique based on the distances $d_1$, $d_2$, or $d_3$ and the differences $\tilde{x}_i$, $\tilde{y}_i$, and $\tilde{z}_i$ between the respective coordinates of the first receiver 110 and each other receiver 112, 114, and 116. In one implementation, the program 224 may compute the coordinates ($R_x$, $R_y$, $R_z$) by expanding the squared terms in Equation (2) and combining with Equation (1) to derive a set of triangulation equations (4A-C) represented by $f_1$, $f_2$, and $f_3$:

$$f_1 : d_1\sqrt{R_x^2 + R_y^2 + R_z^2} + R_x\,\tilde{x}_1 + R_y\,\tilde{y}_1 + R_z\,\tilde{z}_1 - \frac{1}{2}(p_1) = 0 \qquad (4A)$$

$$f_2 : d_2\sqrt{R_x^2 + R_y^2 + R_z^2}\; R_x\,\tilde{x}_2 + R_y\,\tilde{y}_2 + R_z\,\tilde{z}_2 - \frac{1}{2}(p_2) = 0 \qquad (4B)$$

$$f_3 : d_3\sqrt{R_x^2 + R_y^2 + R_z^2} + R_x\,\tilde{x}_3 + R_y\,\tilde{y}_3 + R_z\,\tilde{z}_3 - \frac{1}{2}(p_3) = 0 \qquad (4C)$$

where $p_i = \tilde{x}_i^2 + \tilde{y}_i^2 + \tilde{z}_i^2 - d_i^2$ for i =1,2,3

The program 224 may then solve the three equations to derive the coordinates $R_x$, $R_y$, $R_z$ by the three-dimensional Newton-Raphson gradient triangulation technique shown below in Equation (5) or by another known technique for processing triangulation equations.

$$\begin{bmatrix} R_x \\ R_y \\ R_z \end{bmatrix}_{k+1} = \begin{bmatrix} R_x \\ R_y \\ R_z \end{bmatrix}_k - \begin{bmatrix} \dfrac{\partial f_1}{\partial R_x} & \dfrac{\partial f_1}{\partial R_y} & \dfrac{\partial f_1}{\partial R_z} \\[2ex] \dfrac{\partial f_2}{\partial R_x} & \dfrac{\partial f_2}{\partial R_y} & \dfrac{\partial f_2}{\partial R_z} \\[2ex] \dfrac{\partial f_3}{\partial R_x} & \dfrac{\partial f_3}{\partial R_y} & \dfrac{\partial f_3}{\partial R_z} \end{bmatrix}_k^{-1} \begin{bmatrix} f_1 \\ f_2 \\ f_3 \end{bmatrix}_k \qquad (5)$$

The program 224 may then identify the position of the reference vehicle 102 relative to the autonomous vehicle 104 based on the reference vehicle 102 coordinates ($R_x$, $R_y$, $R_z$) and the location coordinates 226 ($x_0$, $y_0$, $z_0$) of the first receiver (step 426). In one implementation, the program 224 may compute the precise position of the reference vehicle 102 (or stationary reference point) in the autonomous vehicle 104 body-axis coordinate system 120 as shown in Equation (6).

$$\left(R_x + x_0\right), \qquad \left(R_y + y_0\right), \qquad \left(R_z + z_0\right) \tag{6}$$

The position of the reference vehicle 102 determined in the body-axis coordinate system 120 can be used as feedback to a guidance control law (not shown in Figs.) implemented in the computer system 118 or the actuator control computer system 210 to maintain the autonomous vehicle 104 in a desired position relative to the reference vehicle 102 or point. If required, rate information (i.e., relative velocity) may also be computed by the program 224 by numerically differentiating the time correlated position data, for example, as derived using Equation 6. Therefore, methods, systems, and articles of manufacture consistent with one implementation of the present invention determine the position or location of a reference vehicle or stationary point relative to an autonomous (or control) vehicle, allowing the autonomous vehicle to maintain a predetermined distance, range, or guidance profile relative to the reference vehicle or point without the reference vehicle or point communicating position information to the autonomous vehicle.

The foregoing description of an implementation of the invention has been presented for purposes of illustration and description. The description is not exhaustive and does not limit the invention to the precise form disclosed. Modifications and variations are possible in light of the above teachings or may be acquired from practicing the invention. For example, the described implementation includes software (e.g., relative positioning program 224) but the present implementation may be implemented as a combination of hardware and software or hardware alone. Further, the illustrative processing steps performed by the program 224 can be executed in an order different than described above, and additional processing steps can be incorporated. The invention may be implemented with both object-oriented and non-object-oriented programming systems. The scope of the invention is defined by the claims.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions without departing from the scope of the invention, it is intended that all matter contained in the above description or shown in the accompanying drawings shall be interpreted as illustrative and not in a limiting sense.

**Claims**

1. A method for determining a position of a reference point (102) relative to a vehicle (104), the reference point (102) having a transmitter (100) and the vehicle (104) having a first receiver (110), the transmitter (100) being operatively configured to transmit a first waveform, the vehicle (104) having at least three other receivers (112, 114, 116), each receiver (110, 112, 114, 116) being disposed at a known location relative to the vehicle (104); **characterized in that,** the transmitter (100) is further operatively configured to transmit a second waveform, said second waveform having a frequency and a fixed and known number of cycles for each first waveform cycle, the method further comprising:

   detecting the first waveform by each of the receivers (110, 112, 114, 116);
   detecting the second waveform by said at least three other receivers (112, 114, 116);
   identifying a first time when the first waveform is detected by said first receiver (110);
   identifying, for each of said at least three other receivers (112, 114, 116), a respective number of cycles of the second waveform detected by the respective other receiver (112, 114, 116) between the first time and when the first waveform is detected by the respective other receiver (112, 114, 116) ;
   converting each identified respective number of cycles to a respective corresponding distance (d1, d2, d3), said distance (d1, d2, d3) corresponding to the distance between the reference point (102) and the respective other receiver (112, 114, 116) minus the distance between the reference point (102) and the first receiver (110); and
   calculating the position of the reference point (102) using a triangulation technique based on said respective corresponding distances (d1, d2, d3) and the known locations relative to the vehicle of each receiver (110, 112, 114, 116) .

2. The method as set forth in claim 1, wherein the first receiver (110) is positioned closest of the receivers (110, 112, 114, 116) to the reference point (102).

3. The method as set forth in claim 1 or 2, wherein the second waveform has a frequency higher than the first waveform.

4. The method as set forth in any of the preceding claims, wherein the step of converting comprises multiplying the number of cycles for each of the other receivers (112, 114, 116) by a wavelength ($\lambda$) of the second waveform.

5. The method as set forth in any of the preceding claims, wherein the step of calculating the position of the reference point (102) further comprises calculating coordinates ($R_x$, $R_y$, and $R_z$) of the reference point (102) relative to the vehicle (104) using three triangulation equations, the three triangulation equations being derived from a range (R) from the reference point (102) to the first receiver (110) and a geometric relationship between the reference point (102) and each of the other receivers (112, 114, 116).

6. A computer-readable medium containing computer readable instructions that, when run on a computer system (118), cause the computer system (118) to perform a method according to any of the claims 1-5.

7. A vehicle positioning system comprising:

a first vehicle having a reference point (102) provided with a transmitter (100) operatively configured to emit a first waveform; and
a second vehicle (104) having a first receiver (110), the second vehicle (104) comprising at least three other receivers (112, 114, 116), and a computer system (118) operatively connected to each receiver (110, 112, 114, 116), each receiver (110, 112, 114, 116) being disposed at a known location relative to the vehicle (104), and each receiver (110, 112, 114, 116) being operatively configured to detect the first waveform **characterized in that**, the transmitter is further operatively configured to emit a second waveform, said second waveform having a frequency and a fixed and known number of cycles for each first waveform cycle, wherein said at least three other receivers (112, 114, 116) are operatively configured to identify to the computer system (118) a respective number of second waveform cycles detected between a first time at which the first waveform is detected by said first receiver (110) and when the first waveform is detected by the respective other receiver (112, 114, 116); wherein the computer system (118) is operatively configured to convert the respective number of second waveform cycles counted by each of the other receivers (112, 114, 116) into a respective corresponding distance (d1, d2, d3), said distance (d1, d2, d3) corresponding to the distance between the reference point (102) and the respective other receiver (112, 114, 116) minus the distance between the reference point (102) and the first receiver (110), and to determine a position of the first vehicle relative to the second vehicle (104) using a triangulation technique based on said respective corresponding distances (d1, d2, d3) and the known locations relative to the vehicle of each receiver (110, 112, 114, 116).

8. The vehicle positioning system as set forth in claim 7, wherein the first receiver (110) is positioned closest of the receivers (110, 112, 114, 116) to the reference point (102).

9. The vehicle positioning system as set forth in claim 7 or 8, wherein the second frequency of the second waveform is higher than the first frequency of the first waveform.

10. The vehicle positioning system as set forth in any one of the claims 7-9, wherein the step of converting comprises multiplying the number of cycles for each of the other receivers (112, 114, 116) by a wavelength ($\lambda$) of the second waveform.

11. The vehicle positioning system as set forth in any of claims 7-10 wherein the position of the first vehicle (102) is determined by calculating coordinates ($R_x$, $R_y$, and $R_z$) of the reference point (102) relative to the second vehicle (104) using three triangulation equations, the three triangulation equations being derived from a range (R) from the reference point (102) to the first receiver (110) and a geometric relationship between the second vehicle (104) and each of the other receivers (112, 114, 116).

**Patentansprüche**

1. Verfahren zur Bestimmung einer Position eines Referenzpunkts (102) in Bezug auf ein Fahrzeug (104), wobei der Referenzpunkt (102) einen Sender (100) aufweist und das Fahrzeug (104) einen ersten Empfänger (110) aufweist, wobei der Sender (100) betriebsmäßig ausgelegt ist, um eine erste Wellenform zu senden, wobei das Fahrzeug (104) zumindest drei weitere Empfänger (112, 114, 116) aufweist, wobei jeder Empfänger (110, 112, 114, 116) an einer bekannten Stelle in Bezug auf das Fahrzeug (104) angeordnet ist;
**dadurch gekennzeichnet, dass**
der Sender (100) weiterhin betriebsmäßig ausgelegt ist, um eine zweite Wellenform zu senden, wobei die zweite Wellenform eine Frequenz sowie eine feste und bekannte Anzahl von Zyklen für jeden Erstwellenformzyklus aufweist, wobei das Verfahren weiterhin umfasst:

Erfassen der ersten Wellenform durch jeden der Empfänger (110, 112, 114, 116);
Erfassen der zweiten Wellenform durch die zumindest drei weiteren Empfänger (112, 114, 116);
Ermitteln einer ersten Zeit, wenn die erste Wellenform vom ersten Empfänger (110) erfasst wird;
Ermitteln, für jeden der zumindest drei weiteren Empfänger (112, 114, 116), einer jeweiligen Anzahl von Zyklen der vom jeweiligen weiteren Empfänger (112, 114, 116) erfassten zweiten Wellenform zwischen der ersten Zeit und dann, wenn die erste Wellenform vom jeweiligen weiteren Empfänger (112, 114, 116) erfasst wird;
Umwandeln jeder ermittelten jeweiligen Anzahl von Zyklen zu einer jeweiligen entsprechenden Distanz (d1, d2, d3), wobei die Distanz (d1, d2, d3) der Distanz zwischen dem Referenzpunkt (102) und dem jeweiligen weiteren Empfänger (112, 114, 116) weniger der Distanz zwischen dem Referenzpunkt (102) und dem ersten Empfänger (110) entspricht; und
Berechnen der Position des Referenzpunkts (102) mittels eines Triangulationsverfahrens auf Grundlage der jeweiligen entsprechenden Distanzen (d1 d2, d3) und der bekannten Stellen, in Bezug auf das Fahrzeug, jedes Empfängers (110, 112, 114, 116).

2. Verfahren nach Anspruch 1, wobei der erste Empfänger (110) von den Empfängern (110, 112, 114, 116) dem Referenzpunkt (102) am nächsten positioniert ist.

3. Verfahren nach Anspruch 1 oder 2, wobei die zweite Wellenform eine höhere Frequenz aufweist als die erste Wellenform.

4. Verfahren nach einem der vorstehenden Ansprüche, wobei der Schritt des Umwandelns das Vervielfachen der Anzahl von Zyklen für jeden der weiteren Empfänger (112, 114, 116) mit einer Wellenlänge ($\lambda$) der zweiten Wellenform umfasst.

5. Verfahren nach einem der vorstehenden Ansprüche, wobei der Schritt des Berechnens der Position des Referenzpunkts (102) weiterhin das Berechnen von Koordinaten ($R_x$, $R_y$ und $R_z$) des Referenzpunkts (102) in Bezug auf das Fahrzeug (104) mittels dreier Triangulationsgleichungen umfasst, wobei die drei Triangulationsgleichungen abgeleitet sind von einem Bereich (R) vom Referenzpunkt (102) zum ersten Empfänger (110) und einem geometrischen Verhältnis zwischen dem Referenzpunkt (102) und jedem der weiteren Empfänger (112, 114, 116).

6. Computerlesbares Medium, das computerlesbare Anweisungen enthält, die, bei Ausführung auf einem Computersystem (118), bewirken, dass das Computersystem (118) ein Verfahren nach einem der Ansprüche 1 - 5 durchführt.

7. Fahrzeugpositionsbestimmungssystem, umfassend:

ein erstes Fahrzeug mit einem Referenzpunkt (102), der mit einem Sender (100) versehen ist, der betriebsmäßig ausgelegt ist, um eine erste Wellenform auszusenden; und
ein zweites Fahrzeug (104) mit einem ersten Empfänger (110), das zweite Fahrzeug (104) umfassend zumindest drei weitere Empfänger (112, 114, 116), und ein Computersystem (118), das mit jedem Empfänger (110, 112, 114, 116) betriebsmäßig verbunden ist, wobei jeder Empfänger (110, 112, 114, 116) an einer bekannten Stelle in Bezug auf das Fahrzeug (104) angeordnet ist, und jeder Empfänger (110, 112, 114, 116) betriebsmäßig ausgelegt ist, um die erste Wellenform zu erfassen,
**dadurch gekennzeichnet, dass** der Sender weiterhin betriebsmäßig ausgelegt ist, um eine zweite Wellenform auszusenden, wobei die zweite Wellenform eine Frequenz sowie eine feste und bekannte Anzahl von Zyklen für jeden Erstwellenformzyklus aufweist, wobei die zumindest drei weiteren Empfänger (112, 114, 116) betriebsmäßig ausgelegt sind, um für das Computersystem (118) eine jeweilige Anzahl von Zweitwellenformzyklen zu ermitteln, erfasst zwischen einer ersten Zeit, zu der die erste Wellenform vom ersten Empfänger (110) erfasst wird, und dann, wenn die erste Wellenform vom jeweiligen weiteren Empfänger (112, 114, 116) erfasst wird;
wobei das Computersystem (118) betriebsmäßig ausgelegt ist, um die jeweilige Anzahl von Zweitwellenformzyklen, gezählt von jedem der weiteren Empfänger (112, 114, 116), zu einer jeweiligen entsprechenden Distanz (d1 d2, d3) umzuwandeln, wobei die Distanz (d1 d2, d3) der Distanz zwischen dem Referenzpunkt (102) und dem jeweiligen weiteren Empfänger (112, 114, 116) weniger der Distanz zwischen dem Referenzpunkt (102) und dem ersten Empfänger (110) entspricht, und um eine Position des ersten Fahrzeugs in Bezug auf das zweite Fahrzeug (104) zu bestimmen mittels eines Triangulationsverfahrens auf Grundlage der jeweiligen entsprechenden Distanzen (d1 d2, d3) und der bekannten Stellen, in Bezug auf das Fahrzeug, jedes Empfängers (110, 112, 114, 116).

**8.** Fahrzeugpositionsbestimmungssystem nach Anspruch 7, wobei der erste Empfänger (110) von den Empfängern (110, 112, 114, 116) dem Referenzpunkt (102) am nächsten positioniert ist.

**9.** Fahrzeugpositionsbestimmungssystem nach Anspruch 7 oder 8, wobei die zweite Frequenz der zweiten Wellenform höher ist als die erste Frequenz der ersten Wellenform.

**10.** Fahrzeugpositionsbestimmungssystem nach einem der Ansprüche 7 - 9, wobei der Schritt des Umwandelns das Vervielfachen der Anzahl von Zyklen für jeden der weiteren Empfänger (112, 114, 116) mit einer Wellenlänge ($\lambda$) der zweiten Wellenform umfasst.

**11.** Fahrzeugpositionsbestimmungssystem nach einem der Ansprüche 7 - 10, wobei die Position des ersten Fahrzeugs (102) bestimmt wird durch Berechnen von Koordinaten ($R_x$, $R_y$ und $R_z$) des Referenzpunkts (102) in Bezug auf das zweite Fahrzeug (104) mittels dreier Triangulationsgleichungen, wobei die drei Triangulationsgleichungen abgeleitet sind von einem Bereich (R) vom Referenzpunkt (102) bis zum ersten Empfänger (110) und einem geometrischen Verhältnis zwischen dem zweiten Fahrzeug (104) und jedem der weiteren Empfänger (112, 114, 116).

**Revendications**

**1.** Procédé de détermination d'une position d'un point de référence (102) par rapport à un véhicule (104), le point de référence (102) présentant un émetteur (100) et le véhicule (104) présentant un premier récepteur (110), l'émetteur (100) étant configuré de manière opérationnelle pour émettre une première forme d'onde, le véhicule (104) présentant au moins trois autres récepteurs (112, 114, 116), chaque récepteur (110, 112, 114, 116) étant disposé à un emplacement connu par rapport au véhicule (104), **caractérisé en ce que,**
l'émetteur (100) est encore configuré de manière opérationnelle pour émettre une seconde forme d'onde, ladite seconde forme d'onde ayant une fréquence et un nombre fixe et connu de cycles pour chaque cycle de la première forme d'onde, le procédé comprenant en outre :

la détection de la première forme d'onde par chacun des récepteurs (110, 112, 114, 116) ;
la détection de la seconde forme d'onde par lesdits au moins trois récepteurs (112, 114, 116) ;
l'identification d'un premier moment auquel la première forme d'onde est détectée par ledit premier récepteur (110) ;
l'identification, pour chacun desdits au moins trois autres récepteurs (112, 114, 116), d'un nombre respectif de cycles de la seconde forme d'onde détectée par l'autre récepteur respectif (112, 114, 116) entre le premier moment et le moment auquel la première forme d'onde est détectée par l'autre récepteur respectif (112, 114, 116) ;
la conversion de chaque nombre respectif de cycles identifié en une distance correspondante respective (d1, d2, d3), ladite distance (d1, d2, d3) correspondant à la distance existant entre le point de référence (102) et l'autre récepteur respectif (112, 114, 116) moins la distance existant entre le point de référence (102) et le premier récepteur (110) ; et
le calcul de la position du point de référence (102) au moyen d'une technique de triangulation s'appuyant sur lesdites distances correspondantes respectives (d1, d2, d3) et les emplacements connus par rapport au véhicule de chaque récepteur (110, 112, 114, 116).

**2.** Procédé tel que revendiqué dans la revendication 1, dans lequel le premier récepteur (110) est, parmi tous les récepteurs (110, 112, 114, 116), celui situé le plus près du point de référence (102).

**3.** Procédé tel que revendiqué dans la revendication 1 ou 2, dans lequel la seconde forme d'onde a une fréquence supérieure à celle de la première forme d'onde.

**4.** Procédé tel que revendiqué dans l'une quelconque des revendications précédentes, dans lequel l'étape de conversion comprend la multiplication du nombre de cycles pour chacun des récepteurs (112, 114, 116) par une longueur d'onde ($\lambda$) de la seconde forme d'onde.

**5.** Procédé tel que revendiqué dans l'une quelconque des revendications précédentes, dans lequel l'étape de calcul de la position du point de référence (102) comprend en outre le calcul de coordonnées ($R_x$, $R_y$, et $R_z$) du point de référence (102) par rapport au véhicule (104) en utilisant trois équations de triangulation, les trois équations de triangulation étant dérivées d'une étendue (R) allant du point de référence (102) au premier récepteur (110) et d'une relation géométrique entre le point de référence (102) et chacun des autres récepteurs (112, 114, 116).

**6.** Support lisible par ordinateur contenant des instructions lisibles par ordinateur qui, lorsqu'elles sont mises en oeuvres par un système informatique (118), amènent le système informatique (118) à réaliser le procédé selon l'une quelconque des revendications 1 à 5.

**7.** Système de détermination de la position d'un véhicule comprenant :

un premier véhicule présentant un point de référence (102) pourvu d'un émetteur (100) configuré de manière opérationnelle pour émettre une première forme d'onde ; et

un second véhicule (104) présentant un premier récepteur (110), le second véhicule (104) comprenant au moins trois autres récepteurs (112, 114, 116), et un système informatique (118) relié de manière opérationnelle à chaque récepteur (110, 112, 114, 116), chaque récepteur (110, 112, 114, 116) étant disposé à un emplacement connu par rapport au véhicule (104), et chaque récepteur (110, 112, 114, 116) étant configuré de manière opérationnelle pour détecter la première forme d'onde,

**caractérisé en ce que** l'émetteur est encore configuré de manière opérationnelle pour émettre une seconde forme d'onde, ladite seconde forme d'onde ayant une fréquence et

un nombre fixe et connu de cycles pour chaque cycle de la première forme d'onde, lesdits au moins trois autres récepteurs (112, 114, 116) étant configurés de manière opérationnelle pour identifier auprès du système informatique (118) un nombre respectif de cycles de la seconde forme d'onde détectés entre un premier moment auquel la première forme d'onde est détectée par ledit premier récepteur (110) et le moment auquel la première forme d'onde est détectée par l'autre récepteur respectif (112, 114, 116) ;

le système informatique (118) étant configuré de manière opérationnelle pour convertir le nombre respectif de cycles de la seconde forme d'onde comptés par chacun des autres récepteurs (112, 114, 116) en une distance correspondante respective (d1, d2, d3), ladite distance (d1, d2, d3) correspondant à la distance existant entre le point de référence (102) et l'autre récepteur respectif (112, 114, 116) moins la distance existant entre le point de référence (102) et le premier récepteur (110), et pour déterminer une position du premier véhicule par rapport au second véhicule (104) en mettant en oeuvre une technique de triangulation reposant sur lesdites distances correspondantes respectives (d1, d2, d3) et les emplacements connus par rapport au véhicule de chaque récepteur (110, 112, 114, 116).

**8.** Système de détermination de la position d'un véhicule selon la revendication 7, dans lequel le premier récepteur (110) est, parmi tous les récepteurs (110, 112, 114, 116), celui situé le plus près du point de référence (102).

**9.** Système de détermination de la position d'un véhicule selon la revendication 7 ou 8, dans lequel la seconde fréquence de la seconde forme d'onde est supérieure à la première fréquence de la première forme d'onde.

**10.** Système de détermination de la position d'un véhicule tel que revendiqué dans l'une quelconque des revendications 7 à 9, dans lequel l'étape de conversion comprend la multiplication du nombre de cycles pour chacun des autres récepteurs (112, 114, 116) par une longueur d'onde ($\lambda$) de la seconde forme d'onde.

**11.** Système de détermination de la position d'un véhicule tel que revendiqué dans l'une quelconque des revendications 7 à 10, dans lequel la position du premier véhicule (102) est déterminée en calculant des coordonnées ($R_x$, $R_y$, et $R_z$) du point de référence (102) par rapport au second véhicule (104) en utilisant trois équations de triangulation, les trois équations de triangulation étant dérivées d'une étendue (R) allant du point de référence (102) au premier récepteur (110) et d'une relation géométrique détectée entre le second véhicule (104) et chacun des autres récepteurs (112, 114, 116) .

REFERENCE

VEHICLE 102 — TRANSMITTER 106

$R_z$

$R_x$

EVENT WAVE
FRONT 108

$R_y$

COMPUTER
SYSTEM 118

RECEIVER 114

$d_2$

$d_1$

RECEIVER 110

$d_3$

RECEIVER 116

RECEIVER 112

CONTROL
VEHICLE 104

100

x

122

y

124

z

126

FIG.1

EP 2 057 478 B1

_200_

RECEIVER
_110_

DECODER
_202_

RECEIVER
_112_

DECODER
_204_

RECEIVER
_114_

DECODER
_206_

RECEIVER
_116_

DECODER
_208_

_210_

ACTUATOR
CONTROL
COMPUTER
SYSTEM

_218_

ACTUATOR
_212n_

ACTUATOR
_212a_

I/O UNIT _216_

CPU _214_

SECONDARY STORAGE _220_

| _226_ | _228_ | _230_ | _232_ |
| _234_ | _236_ | _238_ | _240_ |
| _242_ | _244_ | _246_ | _248_ |

MEMORY _222_

VEHICLE
POSITIONING
PROGRAM
_224_

COMPUTER SYSTEM _118_

FIG.2

EVENT WAVEFORM 302

306

WAVE FRONT 108
AT RECEIVER 112

TIME

$t_{-1}$    $t_0$    $t_3$    $t_2$    $t_1$

MEASUREMENT
WAVEFORM 304

$d_1 = \lambda x$ (CYCLE COUNT FROM $t_0$ TO $t_1$)

FIG.3

START

*400*

*402*

RECEIVE MEASUREMENT WAVEFORM SEQUENCE
DETECTED BY EACH RECEIVER 110, 112, 114 AND 116

*404*

EVENT
WAVEFORM
DETECTED ?

NO

YES

*406*

IDENTIFY TIME ($t_0$) WHEN EVENT WAVEFORM DETECTED
BY A FIRST OF THE RECEIVERS

CONTINUE TO RECEIVE
MEASUREMENT WAVEFORM
SEQUENCE DETECTED BY
EACH RECEIVER YET TO
DETECT EVENT WAVEFORM

*410*

*408*

EVENT
WAVEFORM DETECTED
BY NEXT RECEIVER ?

NO

YES

*412*

IDENTIFY NUMBER OF CYCLES IN THE MEASUREMENT
WAVEFORM SEQUENCE DETECTED BY THE NEXT RECEIVER
BETWEEN TIME ($t_0$) AND THE TIME (e.g., $t_1$, $t_2$, OR $t_3$)
THE NEXT RECEIVER DETECTED THE EVENT WAVEFORM

*418*

IDENTIFY NEXT RECEIVER
AS THE NEXT RECEIVER
YET TO DETECT THE
EVENT WAVEFORM

CONVERT THE NUMBER OF CYCLES
INTO A CORRESPONDING DISTANCE
(e.g., $d_1$, $d_2$, OR $d_3$)

*414*

*416*

YES

MORE
RECEIVERS ?

NO

A

FIG.4A

Ⓐ

420

RETRIEVE LOCATION COORDINATES FOR EACH RECEIVER
(e.g., $x_i$, $y_i$, $z_i$ WHERE $i$ = 0, 1, 2, 3)

422

CALCULATE DIFFERENCES BETWEEN THE RESPECTIVE
COORDINATES OF THE FIRST RECEIVER AND EACH
OTHER RECEIVER
$\tilde{x}_i = x_i - x_o$     $\tilde{y}_i = y_i - y_o$     $\tilde{z}_i = z_i - z_o$

424

CALCULATE COORDINATES (Rx, Ry, Rz) OF REFERENCE
VEHICLE USING A TRIANGULATION TECHNIQUE BASED
ON THE DISTANCES (e.g., $d_1$, $d_2$, OR $d_3$) AND
THE CALCULATED DIFFERENCES (e.g., $\tilde{x}_i$; $\tilde{y}_i$; $\tilde{z}_i$)

426

IDENTIFY POSITION OF THE REFERENCE VEHICLE
RELATIVE TO THE AUTONOMOUS BASED ON THE
REFERENCE VEHICLE COORDINATES (Rx, Ry, Rz)
AND THE COORDINATES OF THE FIRST RECEIVER

END

FIG.4B

**EP 2 057 478 B1**

**REFERENCES CITED IN THE DESCRIPTION**

**Patent documents cited in the description**

- US 6577272 B1